Europäisches Patentamt

(19) European Patent Office

Office européen des brevets

(11) Publication number: **0 235 163 B1**

(12) **EUROPEAN PATENT SPECIFICATION**

(45) Date of publication of patent specification:
**11.12.91 Bulletin 91/50**

(51) Int. Cl.⁵: **A01K 61/00**

(21) Application number: **86903284.7**

(22) Date of filing: **20.06.86**

(86) International application number:
**PCT/DK86/00072**

(87) International publication number:
**WO 86/07524 31.12.86 Gazette 86/28**

(54) **A FISH BREEDING NET.**

(30) Priority: **21.06.85 DK 2817/85**

(43) Date of publication of application:
**09.09.87 Bulletin 87/37**

(45) Publication of the grant of the patent:
**11.12.91 Bulletin 91/50**

(84) Designated Contracting States:
**BE DE FR GB IT NL SE**

(56) References cited:
**WO A1 85/00726 (Mariculture Development-Advising) - 28 Feb. 1985**

(56) References cited:
**DERWENT'S ABSTRACT N J6014D/37, SU 789065**
**DERWENT'S ABSTRACT N B9383B/09, SU 602146**
**DERWENT'S ABSTRACT N 83-769232/38, SU 973087A**

(73) Proprietor: **Stissing Havsbrugsartikler ApS**
**Mosevej 2**
**DK-8140 Stouby (DK)**

(72) Inventor: **Stissing, Steen**
**DK-7140 Stouby (DK)**

(74) Representative: **Larsen, Hans Ole et al**
**Larsen & Birkeholm ApS Europaeisk**
**Patentbureau P.O. Box 200**
**DK-2630 Taastrup (DK)**

## Description

When breeding fish in large nets which are immersed in the sea, it is important that dead fish are removed as quickly as possible so that they do not spread infection and constitute an environmental danger to the living fish.

When a fish dies, it first sinks slowly to the bottom, but rises after a few days to the surface. The removal should preferably take place prior to the rising.

A known fish breeding net for sea fish farms various net cages for breeding fishes in the sea are known. Some of these cages comprise a bottom bulging downwards, where dead fishes are collected in the centre of the bottom. In connection with such net cages it is known to pull up the central portion of the bottom to the water level, said pulling up procedure allowing formation of a downward bag keeping the dead fishes together. Furthermore, such a downward bag permits an easy taking up of these fishes for instance from a boat rowed close to said bag pulled up comprises pull-up means for use in the removal of dead fish from the net, which net in its stretched state has a bottom, said bottom sloping downwardly towards the central portion of the bottom, said central portion of the bottom being connected with said pull-up means for pulling said central portion of the bottom up to the water surface while leaving active areas of the net below the water surface.

As the bottom of the known net in its stretched state bulges downwardly the dead fish are concentrated in a very limited area at the central portion of the bottom.

When dead fish are to be removed from the net, the central portion of the bottom of the net is pulled up by pulling at the said pull-up means, whereby the central portion of the bottom of the net forms a downward bag and is lifted up in the shape of a pointed cone extending upwardly from the surrounding portions of the net bottom.

The removal of the dead fish is difficult in that the dead fish, which prior to the pull up were collected centrally in the bottom of the net, are now positioned in the downward bag.

It is therefore the object of the invention to provide a fish breeding net for fish farming in the sea from which dead fish can be easily removed.

This object is achieved in that the net is constructed as stated in the characterizing portion of claim 1, since, in this structure, the dead fish are concentrated in the very limited area formed by the net well, from which they can be removed without difficulty when the well has been pulled up to the surface.

The handling of the net well can be facilitated considerably in that it has a wire cross, as stated in claim 2.

The invention will be explained more fully below with reference to the drawing, in which

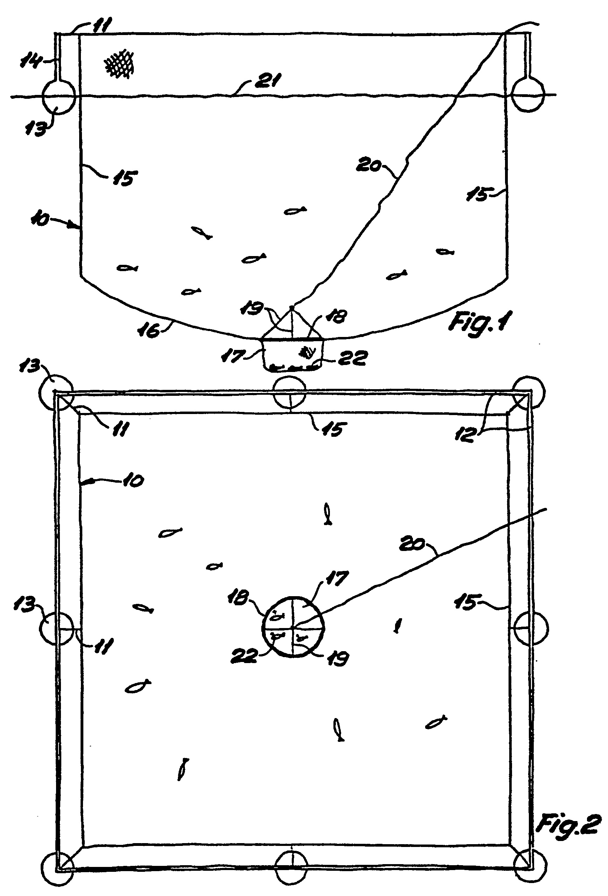

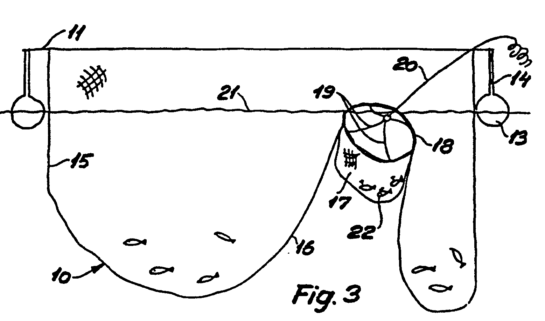

fig. 1 is a lateral view of an embodiment of the fish breeding net of the invention immersed in the sea, fig. 2 shows the same, from above, and fig. 3 is a lateral view, with the net well pulled up to the surface of the water.

In the drawing, the numeral 10 designates a fish breeding net which is square in horizontal section in the shown embodiment when it is stretched, as shown, by means of lines 11 in a frame 12 of rigid rods supported by a plurality of floats 13 with which it is connected by means of vertical rods 14. The floats 13 are preferably spherical and consist of plastics.

In the stretched state, the net 10 has vertical sides 15 and a bottom 16 which slopes downwardly from the lower edges of these sides toward the centre where the net bottom is so shaped as to form a substantially cylindrical well 17, whose upper edge is stiffened by an edge ring 18 which may e.g. consist of a lead line. This edge ring is connected through a wire cross 19 with a pull-up line 20 by means of which the net well 17 can be pulled up to the water surface 21, as shown in fig. 3.

Dead fish 22 which sink to the bottom will sooner or later slide down into the well 17 with the assistance of movements in the water, and these fish can easily be removed from the well when it is pulled up to the surface by means of the line 20 at suitable intervals.

After the net well has been emptied, the line is released, and the net bottom sinks back to the position shown in fig. 1.

## Claims

1. A fish breeding net for sea fish farms comprising a pull-up line for use in the removal of dead fish from the net, which net (10) in its stretched state has a bottom (16), said bottom (16) sloping downwardly towards the central portion of the bottom (16), said central portion of the bottom being connected with said pull-up line (20) for pulling said central portion of the bottom (16) up to the water surface (21) while leaving active areas of the net (10) below the water surface (21), characterized in that the net bottom is so shaped as to form a net well (17) that said net well (17) has a closed lower end and an opening in its upper end, and that said net well (17) opening has a rigid edge ring (18) which is connected with said pull-up line (20).

2. A fish breeding net according to claim 1, characterized in that said pull-up line (20) is connected to the rigid edge ring (18) through a wire cross (19).

## Patentansprüche

1. Netz zur Fischzucht für Seefischfarmen, mit einer Hochziehleine zur Verwendung bei Entfernen toter Fische aus dem Netz (10), das in gespanntem Zustand einen Boden (16) aufweist, der zu seinem Mittelbereich hin abfällt, der mit der Hochziehleine (20) verbunden ist, um den Mittelbereich des Bodens (16) an die Wasseroberfläche (21) zu ziehen, zugleich aber wirksame Teile des Netzes (10) unter der Wasseroberfläche (21) zu belassen, **dadurch gekennzeichnet**, daß der Netzboden so geformt ist, daß sich ein Netztopf (17) ergibt, der ein geschlossenes unteres Ende und in seinem oberen Ende eine Öffnung mit einer steifen Umandung (18) aufweist, die mit der Hochziehleine (20) verbunden ist.

2. Netz zur Fischzucht nach Anspruch 1, **dadurch gekennzeichnet**, daß die Hochziehleine (20) über ein Drahtkreuz (19) mit der Umrandung (18) verbunden ist.

**Revendications**

1. Filet de pisciculture pour fermes piscicoles marines, comportant une ligne de remontée à utiliser pour enlever du filet le poisson mort, lequel filet (10), dans son état tendu, comporte un fond (16), ledit fond (16) descendant en pente vers sa partie centrale, ladite partie centrale du fond étant reliée à ladite ligne de remontée (20) pour que ladite partie centrale du fond (16) soit remontée à la surface (21) de l'eau en laissant des zones actives du filet (10) au-dessous de la surface (21) de l'eau, caractérisé en ce que le fond du filet est configuré de façon à former un puits (17) de filet, en ce que ledit puits (17) du filet présente une extrémité inférieure fermée et une ouverture dans son extrémité supérieure, et en ce que ladite ouverture dudit puits (17) du filet comporte un anneau rigide (18) de bord qui est relié à ladite ligne (20) de remontée.

2. Filet de pisciculture selon la revendication 1, caractérisé en ce que ladite ligne (20) de remontée est reliée à l'anneau rigide (18) de bord par un croisillon (19) de fil.

Fig.1

Fig.2

Fig. 3